# EUROPEAN PATENT APPLICATION

(11) **EP 3 965 000 A1**
(43) Date of publication of application: **09.03.2022**
(21) Application number: 21195556.2
(22) Date of filing: 08.09.2021
(51) Int. Cl.: G06K 7/10, G06K 19/067

(54) **RFID TAG, READER AND METHOD OF ENCODING AN RFID TAG**

(30) Priority: 08.09.2020 IT 202000021214
(71) Applicant: Istituto Poligrafico e Zecca dello Stato S.p.A., 00138 Roma (RM) (IT); Fondazione Bruno Kessler, 38122 Trento (IT)
(72) Inventor: Infortuna, Francesco Antonio, Roma RM (IT); Ghisa, Giuseppe, Roma RM (IT); Mulloni, Viviana, Trento TN (IT); Marchi, Giada, Trento TN (IT); Bucciarelli, Alessio, Trento TN (IT); Resta, Giuseppe, Trento TN (IT)
(74) Representative: Primiceri, Maria Vittoria

(57) **Abstract**

The invention relates to an RFID tag comprising multifrequency electromagnetic resonators carried by a dielectric substrate according to a configuration capable of providing coded data, associable to said tag, having a high number of bits. The invention further provides a reader of RFID tag and a relative coding method wherein data are coded through a simultaneous reading of said electromagnetic resonators with a relative motion of said reader according to preferential directions with respect to the tag itself.

## Description

### Technical field of the invention

The present invention relates to the field of the radio frequency identification (RFID) systems.

In particular, the present invention relates to an RFID system comprising a multifrequency RFID tag and a reading device allowing a quick reading of the tag with high density in coded information.

### Background

The identification systems through radio frequency have acquired in the last years increasing importance in the production field, for example in the field of logistics or tracing of supply chains, by evolving towards increasingly advanced applications.

As it is known, the acronym RFID (Radio Frequency Identification) designates the identification function through radio frequency. The identification involves the assignment of a unique identity to an object which allows to distinguish it not ambiguously.

In the field of the radio frequency identification (RFID) is it known to use *tag,* or tags, based upon an integrated circuit, or *chip,* even if recently the use of so-called *chipless* tags has been developing successfully.

The first ones mainly have limitations linked to high cost and, in some applications, they can be conveniently replaced by the second ones which, as to constructive features, overcome such limitation but, on the other hand, they have drawbacks linked to the reduced amount of information which can be stored in the tag itself.

The *chipless* RFID technology guarantees a relevant cost reduction since the tags are typically based on moulded *encoders* which replace the integrated circuits made of silicon. Such tags can be implemented both in flexible (for example LCP, paper, etc.) and stiff substrates. The moulded *encoder* can be wholly integrated with the *tagging* element with the purpose of providing unique identification signatures, interesting for the authentication and safety applications (banknotes, certificates, official and business documents, exams, cards, etc.).

For example, each one of the publications EP3104307A1, WO2009/126999A1 and CN208705916U discloses a tag integrating coding resonators and antennas for receiving/transmitting an electromagnetic signal, wherein the tag comprises resonators in fixed position and distance with respect to a central microstrip transmission line and wherein the signal is read remotely for all resonators of the tag.

Among the known types of *chipless* technologies, the near-field approach, that is with proximity reading, does not require the contemporary reading of all coding elements. Such approach allows to increase the number of coding elements and thus the coding capability.
The publication WO2018220109A1, for example, discloses a tag wherein identical electromagnetic resonators which use one single resonance frequency are associated to coding areas and they are spatially-equidistant arranged.

A first disadvantage of the above-described solutions, specifically in relation to the near-field *chipless* tags, lies in the slow reading of the coded bits, since typically the electromagnetic resonators are read singularly and sequentially. Under another profile, the above-mentioned solutions have a limit in relation to the representable amount of information which is however reduced, unless using a high number of electromagnetic resonators and thus obtaining a large-sized tag.

### Summary of the invention

The technical problem placed and solved by the present invention then is to provide an RFID tag allowing to obviate one or more of the drawbacks mentioned above with reference to the know art. Such problem is solved by an RFID tag according to claim 1. The invention further relates to a reader and to a method of encoding an RFID tag as defined in claim 8 and 16, respectively. Preferred features of the present invention are set forth in the depending claims.

The present invention then relates to an RFID tag, a reader and a coding method which overcomes the above-mentioned limitations, in particular, a reduced reading speed and a limited amount of codable information.
In a preferred embodiment, the tag of the invention comprises a dielectric substrate and a plurality of resonator elements excitable by an external electromagnetic field. The resonator elements are carried by the dielectric substrate according to a distribution of predefined spatial positions.
At least a first resonator element of said plurality is configured to resonate at a first resonance frequency distinct from a second resonance frequency of a second resonator element, wherein the first and second resonance frequency are selected among a plurality of predefined resonance frequencies.
The above-said dielectric substrate is divided into predetermined coding areas so that data, associable to the tag, are coded according to said distribution of spatial positions and of the resonance frequency of each resonator element with respect to each one of said predetermined coding areas.
Advantageously, the use of resonator elements configured to resonate at different resonance frequencies allows to increase the possible number of logical states which can be associated to the single coding area. Such feature has the effect of increasing the coding density of the tag, by allowing a significant reduction in its sizes and a considerable increase in the amount of information contained thereby.
Still, the distribution of the resonator elements according to predefined spatial positions on the dielectric substrate allows to further increase the amount of codable information. In this way, that is the data which can be coded not only depending upon the value of the resonance frequency associated to each resonator element, but moreover based upon the presence/absence and the position occupied by each resonator element with respect to a respective area of the coding areas wherein the substrate is divided.
Advantageously, the tag of the invention is deprived of means for propagating electromagnetic waves. Such propagating means, of which the tag of the invention is deprived thereof, is meant to identify antennas or transmission lines, for example microstrip transmission lines, indeed configured for propagating (or transmitting) electromagnetic waves.

According to additional aspects, the invention provides a reader of RFID tag and a relative coding method wherein the codified data are preferably detected through a simultaneous reading of said electromagnetic resonators. In a preferred embodiment, the reader is near-field coupled with the RFID tag. The reader comprises an active reading element, functional to the coding method, in particular a microstrip transmission line.
Advantageously, with a relative motion of said reader according to preferential directions with respect to the RFID tag, the invention allows the contemporary reading of several predetermined coding areas, by improving considerably the reading speed.

It will be further appreciated that, advantageously, the tag comprises in substance exclusively resonator elements and that the reading can take place in near field and not remotely, as it would happen if the tag bore propagating means of electromagnetic waves, such as antennas or transmission lines. In fact, according to the invention, the reader carries an active reading element, in particular the microstrip transmission line, configured to propagate the excitation electromagnetic signal and to transmit a response signal received by each resonator element.
In the known systems the resonator elements are constrained to be in very proximate position to the microstrip, constrain which prevents them to be arranged freely on the tag. Moreover, in the known systems, all resonator elements operate at different frequencies, since their reading takes place for all simultaneously.
Differently, considering the particular configuration of the tag and of the reader of the invention, the resonator elements can be distributed according to rows or columns or other arbitrary geometries, and their frequencies can repeat, since the reading takes place in a not simultaneous way for all the resonator elements carried by the tag, but through a scanning of the predetermined coding areas on the tag.
These differences allow to expand indefinitely the number of codable bits, by simply increasing the number of resonators present in the tag. In other words, the maximum number of bits only depends upon the number and spatial arrangement of the resonator elements and, consequently, upon the physical sizes of the tag, and then it can be expanded at will.

Other advantages, features and use modes of the present invention will result evident from the following detailed description of some embodiments, shown by way of example and not for limitative purposes.

### Brief description of figures

The figures of the enclosed drawings will be referred to, wherein:
- Figure 1 shows a schematic view of a preferred embodiment of an RFID tag and of a reader of said tag according to the present invention;
- Figure 2 shows a preferred sequence exemplifying the steps of the reading method provided by the invention, with reference to the RFID tag and the reader shown in Figure 1;
- Figures 3A-3D show respectively four variants of a schematic view of an RFID tag of the invention according to a first coding configuration;
- Figure 4 shows a schematic view of an RFID tag of the invention according to a second coding configuration;
- Figure 5 shows a schematic view of an RFID tag of the invention according to a third coding configuration;
- Figure 6 shows a schematic view of an RFID tag of the invention according to a fourth coding configuration;
- Figure 7 shows a schematic view of an RFID tag of the invention according to a fifth coding configuration;

### Detailed description of preferred embodiments

The present invention will be described hereinafter by making reference to the above-mentioned Figures.

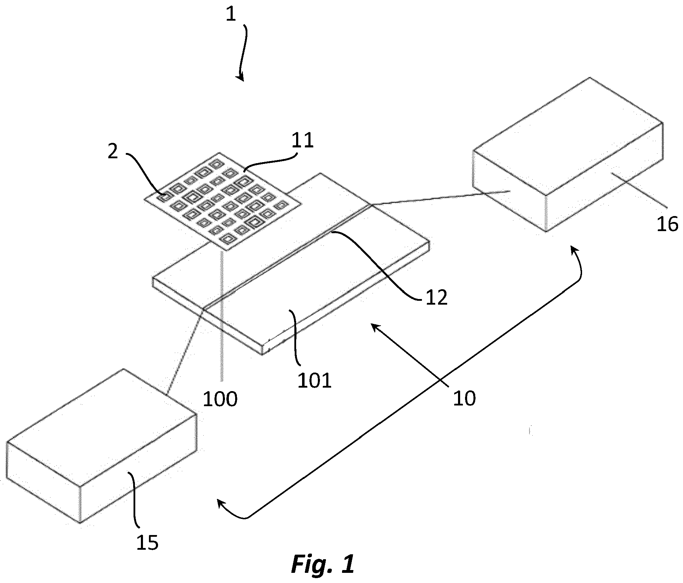

By firstly referring to Figure 1 a scheme exemplifying a system 1 is illustrated comprising a preferred embodiment of an RFID tag, designated with reference 100 and a reader of said RFID tag, designated with reference 10.

Preferably, the configuration of the RFID tag of the present invention is based on the *chipless* technology which, as known to the person skilled in the art, is a configuration deprived of the integrated circuits made of silicon typically necessary to implement the radio frequency identification functionalities. Advantageously, the RFID tag of the present invention is an RFID tag of *chipless* type.

Such system 1 has its preferred intended use in the field of the *supply chain,* of logistics and in the applications related to the identification and tracking of goods.

In general terms, the RFID *tag* 100, thereto hereinafter one will refer for brevity with the term "tag", comprises a dielectric substrate 11 acting as support for a plurality of electromagnetic resonator elements 2.

The dielectric substrate 11 preferably is a substrate made of flexible material, for example plastics or paper. The tag 100 can then be applied, incorporated or carved in a stiff body, such as for example a box-like body which preferably has a planar surface.

Each resonator element 2 can be excited by an electromagnetic field external to the tag 100 and comprises electrically conductive material according to defined *pattern* or motifs.

The resonator elements 2 preferably comprise a planar structure and they are carried by said dielectric substrate 11 according to a distribution of defined spatial positions Ps. To the purposes of the present invention, any type of planar resonator which can be excited by an external electromagnetic field can be used, for example with spiral, *split ring,* geometry in form of dipoles, or any other planar electromagnetic resonator which can be excited by an external electromagnetic field.

The electromagnetic resonator elements 2 are distributed, or arranged, at defined spatial positions Ps of the dielectric substrate 11, for example according to *n* rows and/or m columns so as to form a matrix of positions Ps, regular or with the staggered columns/rows. The resonator elements 2 can be arranged according to other convenient geometrical distributions.

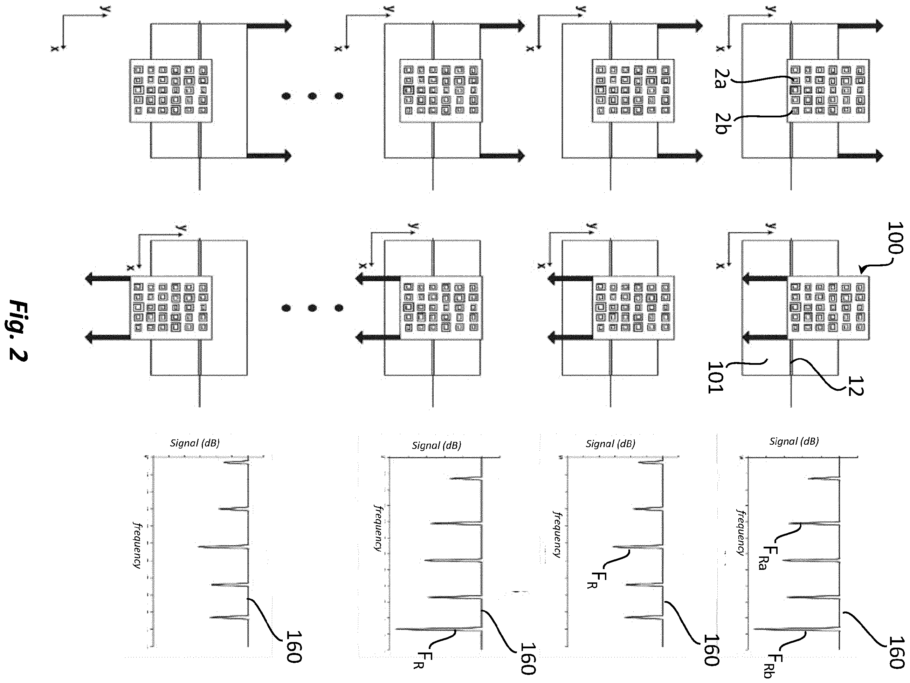

As it can be seen in Figure 2, the distribution of the resonator elements is so that at least a first resonator element 2a is configured to resonate at a first resonance frequency F_{Ra} distinct from a second resonance frequency F_{Rb} of a second resonator element 2b. The first and second resonance frequency are comprised among a plurality of predefined resonance frequencies F_{R}.

Contrary to the known systems based upon *chipless* RFID tags exploiting the near-field coupling, in the present invention the resonator elements 2 are not configured to resonate all at the same resonance frequency, but each one resonates at a frequency F_{R} selected among the plurality of predefined resonance frequencies.

Each resonance frequency F_{R} is comprised in a range of predefined values, preferably said range is comprised between 0.5 GHz and 20 GHz. According to a preferred embodiment, the plurality of predefined resonance frequencies F_{R} comprises a number of frequencies comprised between 2 and 50. The overall number of resonance frequencies F_{R} can be even higher.

In embodiment variants, the distribution of frequencies F_{R} within said range of values of resonance frequencies can correspond to a linear, logarithmic distribution or other non-linear distribution.

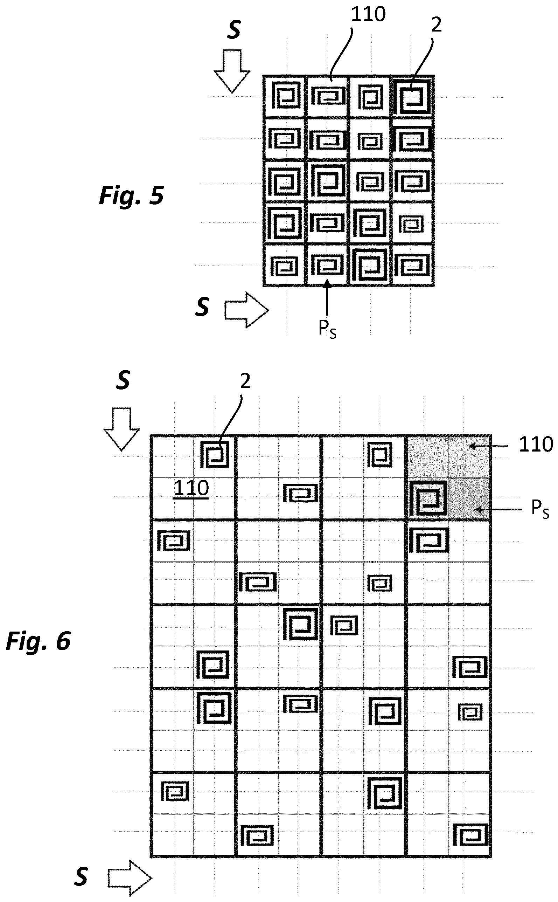

With reference to Figure 5, a possible coding configuration of the tag 100 is represented, wherein a division of the dielectric substrate 11 in predetermined coding areas 110 can be seen. In this way, it is possible coding data associable to the tag 100 depending both upon the distribution of spatial positions Ps and the resonance frequency F_{R} of each resonator element 2 with respect to each one of the predetermined coding areas 110. Said data can be information related, for example, to the content of the article carrying the tag 100.

The number, presence or absence in determined spatial positions Ps and the resonance frequency F_{R} of each one of the resonator elements 2 determines in a unique way the coding of data contained in the tag 100, according to a coding method which will be described subsequently.

The above-said spatial positions Ps can constitute, for example, the above-mentioned matrix of *n* rows and/or m columns.

Preferably, each predetermined coding area 110 comprises a resonator element 2 and one single spatial position Ps, such as for example for the configuration illustrated in Figure 5. In other cases, a predetermined coding area 110 can include two or more of said spatial positions Ps. In the configuration of Figure 6 each coding area 110 comprises four spatial positions Ps.

Therefore, contrary to the known identification and tracking systems which are based upon *chipless* RFID tags and which use a binary coding, the invention provides a coding system 1 which is based upon the presence or absence, on the spatial position Ps and on the value of the resonance frequency F_{R} of each resonator element 2.

In the present document the expression "absence" of electromagnetic resonator element 2 relates to one of the following alternative cases: the absence of an electromagnetic resonator 2 or the presence of an electromagnetic resonator 2 which resonates outside its own pre-established resonance frequency F_{R} when excited by an external electromagnetic field.

For example, the presence or the absence of each one of the predefined frequencies can correspond to one bit of coded information. In other words, a logical state "0" can be associated to a coding area 110 when it is characterized by the absence of electromagnetic resonator 2.

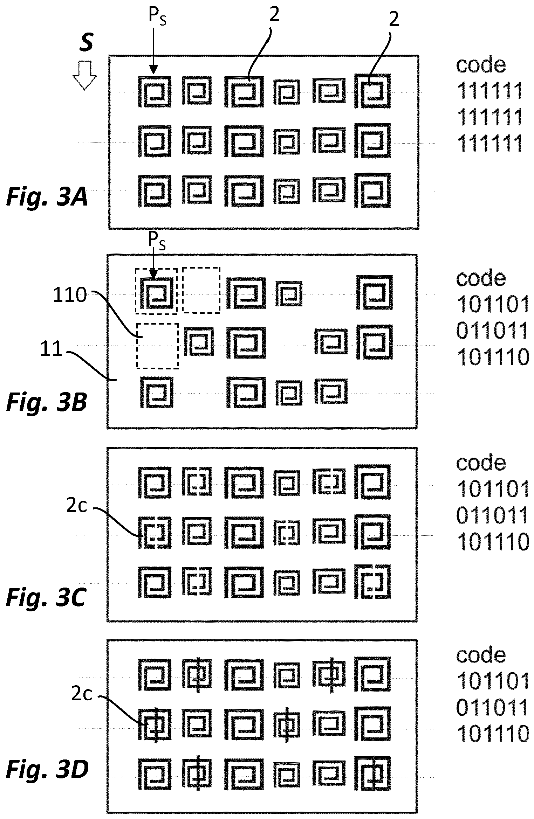

With reference to Figures 3A-3D, four different variants of a first coding configuration of the tag 100 are shown, respectively.

For each variant, the distribution of the resonator elements 2 is in accordance to a matrix of three rows and six columns, in each coding area a resonator element 2 is present or absent and the data associated to the tag 100 coded in binary code are shown. The binary code consists of three rows and six columns in a way corresponding to the number of predetermined coding areas 110 associated to the tag 100.

The presence of resonator element 2 which resonates at its own resonance frequency corresponds to the logical state "1".

In Figure 3B, it is shown that the absence of resonator element 2 corresponds to the logical state "0".

According to embodiments of the tag 100, it is possible to alter the structure of one or more resonator elements 2c so as to modify the respective resonance frequency F_{R}.

Such condition is shown in Figures 3C and 3D for the resonator elements 2^{nd} and 5^{th} of the first row, 1^{st} and 4^{th} of the second row, 2^{nd} and 6^{th} of the third row, with reference to a counting going from left to right for the resonator elements on said rows.

The logical state "0" then can be even obtained by adding or removing conductive material from a specific resonator element 2, in this way by moving its resonance frequency F_{R} outside the interest range. With such method it is possible to modify the reading of the predetermined coding area 110, by transforming a logical state "1" into a logical state "0" or vice versa.

Referring again to Figure 1, the reader 10 of the tag 100 comprises a dielectric support 101 movable relative to the tag 100 and means 15 for generating an excitation electromagnetic signal, configured to excite the above-mentioned resonator elements 2.

The relative movement between the reader 10 and the tag 100 can be controlled manually or, for example through automatic systems.

The reader 10 is a functional device to the coding method of the tag 100 and comprises detection means 16 of a response signal 160 from the resonator elements 2. The reader 10 is configured to detect a response signal 160 which preferably comprises attenuation peaks of electromagnetic waves associated to the resonance frequencies F_{R} of the resonator elements 2.

An example of said response signal 160 is illustrated with reference to Figure 2. In such figure for each *n* row, in accordance therewith the resonator elements of the tag 100 are distributed, a graph is shown reporting the reading of the attenuation peaks of electromagnetic waves with respect to the resonance frequencies F_{R} of the resonator elements 2 which are distributed on the same *n* row.

By associating the resonance frequencies F_{R} detected at a respective n row of the tag 100, it is possible to code the data associable to the tag 100 depending upon the distribution of the n row and of the resonance frequencies F_{R} of each resonator element 2.

The coding system of the present invention is a system allowing to process the data detected by the reader 10 producing coded data, for example a binary or alphanumeric code. It will be appreciated that the fact of providing a plurality of predefined frequencies F_{R} reduces considerably the number of resonator elements 2 required to obtain a defined number of bits, thus by increasing the information density contained in the tag 100.

To this purpose, the dielectric support 101 carries an active reading element which comprises a microstrip transmission line 12. The reading active element is configured to propagate the excitation electromagnetic signal and to transmit to the detection means 16 the response signal 160 received by each resonator element 2. The reading active element is operatively connected with said generating means 15 and it is preferably supplied by the latter.

Although Figure 1 shows the reader 10 as consisting of separated components, in particular the generating means 15 and the detection means 16, in embodiment variants the reader 10 can be implemented in one single portable device. Advantageously, the dielectric support 101 carries a layer of dielectric material interposed between it and the tag 100 to avoid the contact with the resonator elements 2. Said material layer is preferably placed at said microstrip transmission line 12. The microstrip transmission line 12 can be linear or angled. In preferred embodiments, the layer of dielectric material is carried by the tag 100 to cover the resonator elements 2 (presence of dielectric material).

The reader 10 and the tag 100 are preferably configured for a near-field electromagnetic coupling, without contact or without direct contact between the microstrip transmission line 12 and the resonator elements 2.

The electromagnetic coupling between reader 10 and the resonator elements 2 of the tag 100 is established under proximity conditions, preferably at distance not greater than ten millimetres. For example, such coupling is established with reference to the detection (or absence of detection) of attenuation peaks corresponding to the presence (or absence) of respective resonator elements 2 which resonate at their own resonance frequency F_{R}.

Depending upon the type of tag 100 therewith the reader 10 is assigned to couple, the reading active element is configured to propagate the excitation electromagnetic signal in the range of interest frequencies, preferably comprised between 0.5 GHz and 20GHz.

The reader 10 can include guiding means to favour a correct positioning between the tag 100 and the reader 10 during their relative motion. Preferably, the guiding means is configured to confine in a preferential direction S the relative motion between said dielectric support 101 and the tag 100.

Referring again to Figure 2, it is shown that said relative motion can include a motion of the tag 100 with respect to the microstrip transmission line 12 in fixed position or, vice versa, the motion of the microstrip transmission line 12 with respect to the tag 100 in fixed position.

The guiding means can include a mechanical structure, for example a rail, combined to the dielectric support 101 allowing to guide the tag 100 in case it moves. Such structure is to be meant as a confinement structure capable of allowing the motion of the tag 100 only in the wished direction, by avoiding unwished side motions. Alternatively, in case the microstrip transmission line 12 moves, said structure can act as position *marker,* by allowing to position the tag 100 in a selected location and by making that the reading of the tag 100 starts when it is in a known reference position.

In general terms and according to a first embodiment, the coding method of the tag 100 can then provide resonator elements 2 which resonate at different resonance frequencies F_{R} for each *n* row / m column and/or the presence of several spatial positions Ps within the same predetermined coding area 110. Preferably, the detection of the resonance frequencies F_{R} of the resonator elements 2 takes place by means of reading by *n* rows only. In other cases, the reading takes place by *n* rows and m columns.

Preferably, then, the detection comprises a relative motion between the tag 100 and the microstrip transmission line 12 of the reader 10 along a preferential detection direction S which is parallel or orthogonal with respect to the distribution direction of spatial positions Ps of the resonator elements 2.

Advantageously, simultaneous readings of two or more predetermined coding areas 110 are possible, in particular of more resonator elements 2 related to the same *n* row or m column.

Going back to the variants of the coding configuration of the tag shown in Figures 3A-3D, in these examples the electromagnetic resonator elements 2 in the same *n* row have each one a different resonance frequency F_{R} and they are in number equal to the number of the predefined resonance frequencies. The resonator elements 2 in the same *n* row are read contemporarily by the reading active element by near-field electromagnetic coupling while this moves in direction S perpendicular to the *n* rows.

In case of N predefined frequencies by row and *n* rows, the total number of coded bits is n x N. A code of 96 bits, required for the standard EPC (Electronic Product Code) can be obtained with 8 rows and 12 predefined frequencies or with 6 rows and 16 predefined frequencies.

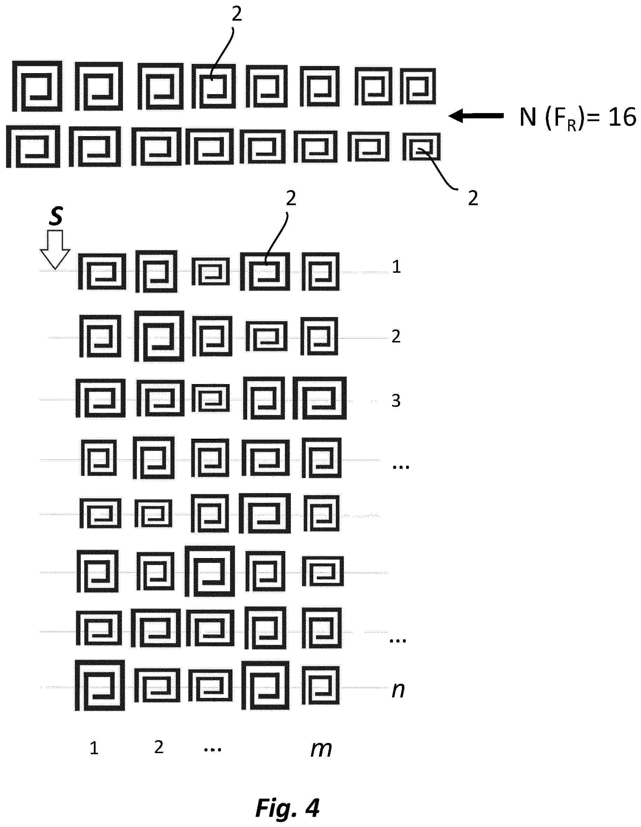

A second coding configuration of the tag 100 is shown in Figure 4.

In this example, the resonator elements 2 are arranged on one or more *n* rows. Each row includes a number r of resonators 2 which are associated to a number N of predefined frequencies F_{R} (including zero). The resonator elements resonate, each one, at a different resonance frequency F_{R} if in the same *n* row, whereas they can have the same resonance frequency F_{R} in different rows (if present). The r resonator elements 2 in the same row are read contemporarily by the reading active element by near-field electromagnetic coupling while this moves in direction S perpendicular to the *n* rows. The resonator elements 2 on different rows are read separately.

For each *n* row there can be N! / [(N-*r*)! *r*!] combinations. The number of bits by *n* rows of *r* resonators then is equal to a *n* x log₂ {N! / [(N-r)! *r*!] }. Having N=16 predefined resonance frequencies F_{R} and *r* = 5 number of resonators by row, 4368 combinations by row are obtained equal to 12.1 bits. *n*=8 rows are sufficient to obtain 96.7 bit.

An additional coding configuration of the tag 100 is shown in Figure 5.

In this example, the resonator elements 2 are arranged in a matrix with *n* rows and *m* columns. All resonator elements 2 in a same *n* row of the matrix at distinct frequencies F_{R} and all resonator elements 2 in a same m column of the matrix resonate at distinct frequencies. The number N of minimum predefined resonance frequencies F_{R} is then equal to the maximum between *n* and *m*. Even the possibility of absence of a resonator element 2 can be provided.

The matrix is read by the reading active element through a contemporary reading of all resonator elements 2 along the preferential direction S, in particular on a same *n* row, in the same way described for the configuration of Figure 4. After having rotated the tag 100 (or the microstrip transmission line 12) by 90° degrees, the tag 100 is read again, in particular by reading contemporarily all resonator elements 2 on a same *m* column.

By comparing the frequencies F_{R} read along the *n* rows and along the m columns the spatial arrangement of the resonator elements 2 is reconstructed. The number of bits for this configuration is equal to a log₂ [Πₖ=0^{*n*-1}(N-k)!/(N-k-*m*)!].

A matrix *n* x *m* with n=4 and m=5 can code 57 bits by using N=11 different resonance frequencies F_{R} or N=10 different resonance frequencies F_{R}, by including the possibility of absence of resonator element 2 as equivalent to an additional frequency F_{R}.

As an alternative to the reading by *n* rows and *m* columns the tag 100 can be "replicated" through a recombination of the distribution of spatial positions Ps of the resonator elements 2, for example by providing a transposed matrix of *n^{T}* rows and *m^{T}* columns which includes the same resonator elements 2 provided by the original distribution. In this way and with reference to the example, advantageously it is possible to avoid the rotation by 90° degrees and the reading can be implemented in only one preferential direction S.

Figure 6 shows still a different variant of the coding configuration of the tag 100 illustrated in Figure 5. In this case, each predetermined coding area 110 of the matrix *n* x *m* comprises four spatial positions Ps and only one resonator element 2 which can be positioned in any one of said four spatial positions Ps within the respective predetermined coding area 110. Each resonator element 2 in a same *n* row of the matrix resonates at a different resonance frequency F_{R}. Analogously, each resonator element 2 in a same m column resonates at a different resonance frequency F_{R}.

In this way the logical states of each coding area 110 are increased from N to PsxN (with N number of predefined resonance frequencies F_{R}). The reading is implemented by *n* rows and by *m* columns with the same modes of the example of Figure 5, but in this case the reading is further implemented for all spatial positions Ps of each coding area 110. By comparing the N resonance frequencies F_{R} read along the *n* rows and along the m columns, it is possible to reconstruct the spatial arrangement of the resonator elements 2.

In other words, a matrix *n* x *m* with n=4 and m=5, wherein each coding area comprises a number z of spatial positions Ps, has an area equivalent to a matrix z times the area of the matrix *n* x *m* wherein the coding areas 110 include, each one, only one spatial position Ps.

The number of bits for this configuration is (nxm)xlog₂(z)+log₂[IIₖ=0^{m-1}(N-k)!/(N-k-m)!]. By using for example N=11 different resonance frequencies F_{R}, and by providing four spatial positions for each coding area 110, a matrix 4x5 can code 97 bits.

According to a different embodiment, the coding method of the tag 100 provides a spatial distribution of the resonator elements 2 according to a matrix of *n* rows with *m* staggered columns. The reading is performed so that resonator elements 2 with same resonance frequency F_{R} and arranged on different *m* columns are read simultaneously in a position Ps but not in the previous or in the subsequent reading. The processing of the sequence of readings in frequency whole reconstructs the arrangement of the resonator elements 2 in the tag 100.

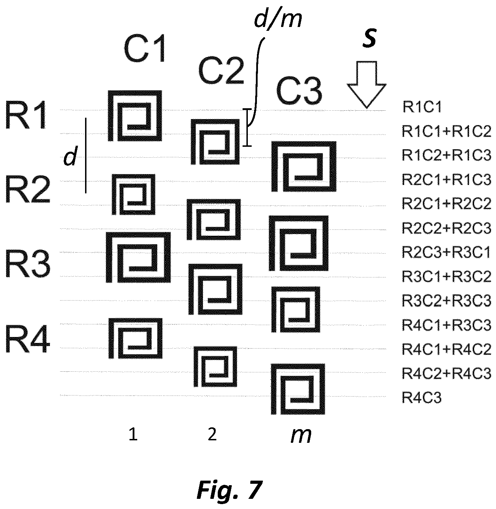

An exemplification of the above-mentioned coding configuration will be described hereinafter with reference to the tag illustrated in Figure 7.

Resonator elements in a same column C1, C2, C3 are spaced apart therebetween by a distance d. Resonator elements in adjacent columns are not perfectly aligned on rows R1, R2, R3, R4, but they are moved vertically by an amount *d*/*m* wherein *m* is the number of columns.

Some resonator elements in this configuration can resonate at the same (or different) resonance frequencies F_{R} among the predefined ones or even be absent in specific predetermined coding areas 110. The resonator elements are preferably read whereas the microstrip transmission line 12 moves along the *m* columns.

In order to obtain the code, the position of the microstrip 12 is strictly associated to the reading in frequency and a same resonator element (detected by the position R1C1) is read more than once in a different relative spatial position of the microstrip 12. At least *m* readings equal to the number of columns have to be performed whereas the relative motion between the active reading element and the tag 100 covers a distance *d.*

The number of bits for an arrangement of *m* columns with *z* resonator elements by column is equal to (*z* x *m*)xlog₂(N+1), where N is the number of predefined resonance frequencies F_{R} and the absence of a resonator 2 is equivalent to an additional resonance frequency F_{R}. By using for example N=15 predefined resonance frequencies F_{R}, 3 *m* columns of 8 resonators are sufficient to obtain 96 bits.

The present invention has been sofar described with reference to preferred embodiments. It is to be meant that other embodiments belonging to the same inventive core may exist, as defined by the protective scope of the herein reported claims.

## Claims

1. AN RFID tag (100), comprising:
- a dielectric substrate (11),
- a plurality of resonator elements (2) excitable by an external electromagnetic field and carried by said dielectric substrate (11) according to a distribution of spatial positions (Ps),
wherein at least a first resonator element (2a) is configured to resonate at a first resonance frequency (F_{Ra}) distinct from a second resonance frequency (F_{Rb}) of a second resonator element (2b), said first (F_{Ra}) and second (F_{Rb}) resonance frequency being selected among a plurality of predefined resonance frequencies (FR),
wherein said dielectric substrate (11) is divided into predetermined coding areas (110) in such a way that data associable to the tag (100) are coded according to said distribution of spatial positions (Ps) and of the resonance frequency (F_{R}) of each resonator element (2) with respect to each one of said predetermined coding areas (110),
wherein the tag (100) is devoid of means for propagating electromagnetic waves.

2. The RFID tag (100) according to the preceding claim, wherein each predetermined coding area (110) comprises a single resonator element (2).

3. The RFID tag (100) according to claim 1 or 2, wherein a predetermined coding area (110) comprises one or more of said spatial positions (Ps).

4. The RFID tag (100) according to any one of the preceding claims, wherein said plurality of predefined resonance frequencies (F_{R}) comprises a number of resonance frequencies comprised between 2 and 50.

5. The RFID tag (100) according to any one of the preceding claims, wherein each resonance frequency (F_{R}) is comprised in a range of values between 0.5 GHz and 20 GHz.

6. The RFID tag (100) according to any one of the preceding claims, wherein said distribution of spatial positions (Ps) comprises a matrix of (n) rows and/or (m) columns.

7. The RFID tag (100) according to any one of the preceding claims of chipless type and configured to a near-field electromagnetic coupling.

8. A reader (10) of an RFID tag (100), which reader (10) comprises:
- a dielectric support (101) movable relative to the tag (100),
- means (15) generating an electromagnetic signal configured to excite resonator elements (2) of the tag (100),
- means (16) for detecting a response signal (160) from the resonator elements (2),
wherein said dielectric support (101) carries an active reading element operatively connected with said generating means (15) and comprising a microstrip transmission line (12), said active reading element being configured to propagate the electromagnetic signal and transmit said response signal (160) to said detection means (16).

9. The reader (10) according to claim 8, wherein said dielectric support (101) comprises a layer of dielectric material interposed between said microstrip transmission line (12) and the RFID tag (100).

10. The reader (10) according to claim 8 or 9, wherein said active reading element is configured to propagate the electromagnetic signal in a frequency range comprised between 0.5 GHz and 20GHz.

11. The reader (10) according to any one of claims 8 to 10, wherein said active reading element is supplied by said generating means (15).

12. The reader (10) according to any one of claims 8 to 11, wherein said response signal (160) comprises attenuation peaks of electromagnetic waves associated to a plurality of resonance frequencies (F_{R}) of the resonator elements (2).

13. The reader (10) according to any one of claims 8 to 12, wherein said dielectric support (101) comprises guiding means configured to confine in a preferential direction the relative motion between said dielectric support (101) and the RFID tag (100).

14. The reader (10) according to any one of claims 8 to 13 and configured to a near-field electromagnetic coupling with the RFID tag (100), preferably at a distance not greater than ten millimetres.

15. A radio frequency identification system (1) comprising an RFID tag (100) according to any one of claims 1 to 7 and a reader (10) according to any one of claims 8 to 14.

16. A method of encoding an RFID tag (100) according to any one of claims 1 to 7 by means of a reader (10) according to any one of claims 8 to 14, comprising the steps of:
▪ providing the RFID tag (100) comprising a plurality of resonator elements (2) carried according to a distribution of spatial positions (Ps),
▪ coupling the reader (10) with the RFID tag (100),
▪ detecting the resonance frequency (F_{R}) of each resonator element (2),
▪ coding data, associable to the tag (100), according to the distribution of spatial positions (Ps) and the resonance frequency (F_{R}) of each resonator element (2) with respect to each predetermined coding area (110).

17. The coding method according to the preceding claim, wherein the detection is carried out simultaneously for two or more predetermined coding areas (110).

18. The coding method according to claim 16 or 17, wherein the detection comprises moving the RFID tag (100) and the microstrip transmission line (12) of the reader (10) relative to each other along a preferential detection direction (S) parallel or orthogonal with respect to the distribution of spatial positions (Ps) of the resonator elements (2).

19. The coding method according to any one of claims 16 to 18, wherein said distribution of spatial positions (Ps) comprises a matrix of (n) rows and/or (m) columns of resonator elements (2) and the detection is carried out simultaneously for resonator elements distributed on the same row (n) or column (m).

20. The coding method according to any one of claims 16 to 19, wherein each predetermined coding area (110) comprises a plurality of said spatial positions (Ps) and the data are further coded according to each spatial position detected within a respective predetermined coding area (110).

21. The coding method according to any one of claims 16 to 20, further comprising the step of altering the structure of one or more resonator elements (2c) in such a way as to modify the respective resonance frequency (F_{R}).

22. The coding method according to any one of claims 16 to 21, configured for a near-field electromagnetic coupling.
